Europäisches Patentamt

European Patent Office

Office européen des brevets

(11) Veröffentlichungsnummer: **0 399 056**
**A1**

## EUROPÄISCHE PATENTANMELDUNG

(21) Anmeldenummer: 89103370.6

(22) Anmeldetag: 25.02.89

(51) Int. Cl.⁵: **B62M 3/08**

Die Bezeichnung der Erfindung wurde geändert (Richtlinien für die Prüfung im EPA, A-III, 7.3).

(43) Veröffentlichungstag der Anmeldung:
**28.11.90 Patentblatt 90/48**

(84) Benannte Vertragsstaaten:
**AT BE CH DE ES FR GB GR IT LI LU NL SE**

(71) Anmelder: **UNION Sils, van de Loo & Co. GmbH**
**Ardeyer Strasse 13/15**
**D-5758 Fröndenberg/Ruhr(DE)**

(72) Erfinder: **Kreisfeld, Peter**
**Hauptstrasse 159**
**D-1000 Berlin 62(DE)**

(74) Vertreter: **Patentanwaltsbüro Cohausz & Florack**
**Schumannstrasse 97**
**D-4000 Düsseldorf 1(DE)**

(54) **Kunststoffpedal.**

(57) Die Erfindung betrifft ein Pedal mit Trittflächen aus einem Kunststoffmaterial, das von dem Material des Pedalkörpers unterschiedlich ist, wobei Pedalkörper 1 und Trittflächen 6 aneinander durch eine Klebverbindung befestigt sind.

FIG. 1

EP 0 399 056 A1

## Pedal mit Trittfläche

Die Erfindung betrifft ein Pedal mit Trittflächen aus einem Kunststoffmaterial, das von dem Material des Pedalkörpers unterschiedlich ist,

Es ist bekannt, Trittflächen getrennt vom übrigen Körper eines Pedals herzustellen und diese an den Pedalkörper durch vorstehende Stifte anzuklemmen. Diese Befestigung ist nicht immer ausreichend beständig, so daß die Trittflächen sich lösen können. Auch sind Herstellung und Montage arbeitsaufwendig.

Aufgabe der Erfindung ist es, ein Pedal der eingangs genannten Art so zu verbessern, daß bei einfacher und preiswerter Herstellung eine sichere unlösbare Verbindung geschaffen wird.

Diese Aufgabe wird erfindungsgemäß dadurch gelöst, daß Pedalkörper und Trittflächen aneinander durch eine Klebverbindung befestigt sind.

Bei einem solchen Pedal sind die Trittflächen so sicher am Pedalkörper befestigt, daß auch über längere Benutzungsdauer ein Lösen ausgeschlossen ist. Besonders vorteilhaft ist es, wenn die Verbindung eine Schmelzverbindung ist. In diesem Fall ist ein Klebstoff selber nicht mehr erforderlich, sondern aufgrund der Wahl der Materialien von Pedalkörper und Trittfläche können die Oberflächen in der Weise aneinandergefügt sein, daß die Moleküle sich ineinander verzahnen.

Vorzugsweise wird vorgeschlagen, daß die Trittflächen getrennt in einer ersten Form hergestellt werden, daß der Pedalkörper in einer zweiten hergestellt wird und daß Trittfläche und Pedalkörper aneinander geklebt, geschweißt oder durch Anlöten der Unterseite der Trittflächen angeformt werden. Hierbei ist besonders vorteilhaft. wenn in eine Form des Pedalkörper die zuvor hergestellten Trittflächen eingelegt und danach der Kunststoff des Pedalkörpers eingespritzt wird.

Eine einfache, schnelle und kostengünstige Herstellung in nur einer Form wird dann möglich, wenn eine Form den zuvor hergestellten Pedalkörper einlegt und die Trittflächen angespritzt werden. Alternativ kann hierzu eine Form mit einem ersten Hohlraum mit den Außenabmessungen des Pedalkörpers mit dem ersten Kunststoff ausgespritzt werden und hierbei die angrenzenden zweiten Hohlräume in Form und Größe der Trittflächen durch entfernbare Teile, insbesondere Schieber verschlossen, insbesondere ausgefüllt sein und nach zumindest teilweiser Verfestigung des Pedalkörpermaterials die Teile entfernt und die zweiten Hohlräume mit dem zweiten Kunststoff ausgespritzt werden.

Vorzugsweise wird vorgeschlagen, daß das Material der Trittflächen weicher als das des Pedalkörpers ist. Dies führt dazu, daß dem Schuh des Fahrradfahrers ein besonders sicherer Halt geboten wird.

Ein Ausführungsbeispiel der Erfindung ist in der Zeichnung dargestellt und wird in verschiedenen Herstellungsweisen im folgenden beschrieben. Es zeigen

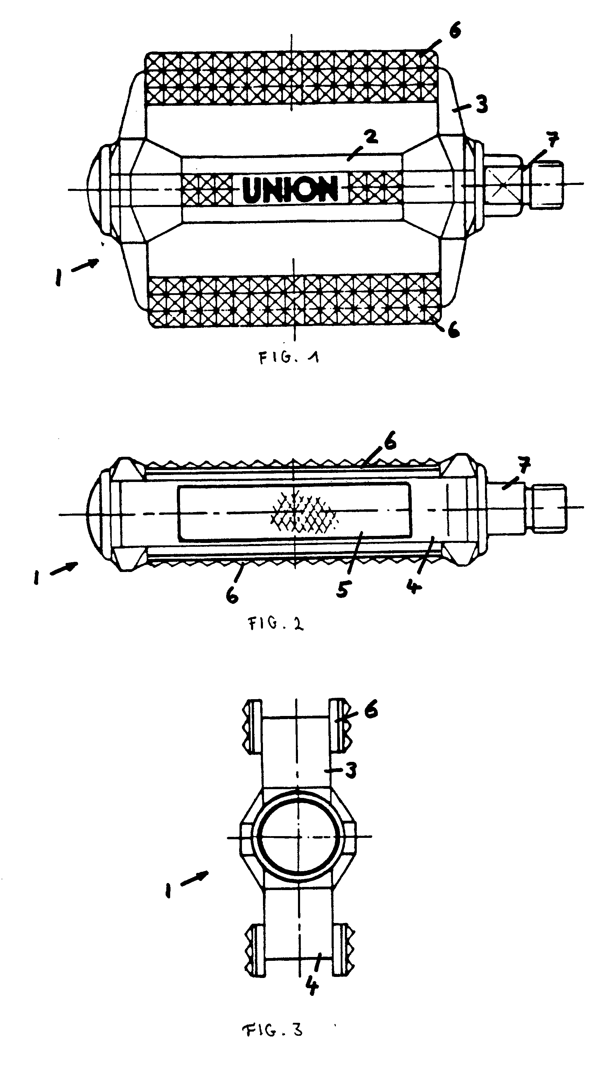

Figur 1 eine Draufsicht auf das Pedal,
Figur 2 eine Seitenansicht des Pedals,
Figur 3 eine Stirnansicht des Pedals.

Der Pedalkörper 1 besteht aus Kunststoffmaterial, insbesondere aus Thermoplasten. Der Pedalkörper besitzt ein Mitteilteil 2, das die Achse bildet und durch seitliche Stege 3 verbunden auf einander gegenüberliegenden Seiten zwei zur Achse parallele Stützteile 4, in denen die Reflektoren 5 eingelassen sind und an deren Seitenflächen in gleicher Höhe einander gegenüberliegend auf beiden Seiten je eine Trittfläche 6 befestigt ist, so daß insgesamt vier Trittflächen angeordnet sind.

Die Trittflächen 6 werden in einer ersten Form gesondert aus gegenüber dem Pedalkörper weicherem und damit rutschsicheren Thermoplasten mit größerem Haftreichungskoeffizienten als das Pedalkörpermaterial hergestellt. Diese Materialien haben eine Shore-Härte von ca. 55 bis ca. 100.

Der bis auf die einliegende später zu montierende Achse 7 einstückige Pedalkörper 1 wird in einer zweiten Form hergestellt, die die Außenabmessungen des Pedalkörpers aufweist und in der der Kunststoff des Pedalkörpers eingespritzt wird. Zuvor werden aber in die Form des Pedalkörpers die vier zuvor hergestellten Trittflächen 6 eingelegt, so daß beim Einspritzen des Kunststoffmaterials des Pedalkörpers dieser Kunststoff die Unterseiten der Trittflächen anlöst und eine Schmelzverbindung schafft, die nach Festwerden des Kunststoffs des Pedalkörpers unlösbar ist.

Alternativ kann aber auch der Pedalkörper 1 mit den Trittflächen 6 durch eine Klebeverbindung oder eine Schweißverbindung befestigt werden.

Besonders vorteilhafte Herstellungsverfahren in nur einer Form sind die zwei folgenden:

1. Eine Form mit einem ersten Hohlraum mit den Außenabmessungen des Pedalkörpers 1 wird mit dem ersten Kunststoff ausgespritzt. Hierbei werden die angrenzenden zweiten Hohlräume in Form und Größe der Trittfläche 6 durch entfernbare Teile, insbesondere Schieber verschlossen, insbesondere ausgefüllt. Nach der zumindest teilweisen Verfestigung des Pedalkörpermaterials werden die Teile entfernt und die zweiten Hohlräume mit dem zweiten Kunststoff ausgespritzt.

2. Eine Form weist einen ersten Hohlraum mit den Außenabmessungen des Pedalkörpers 1 und daran angrenzende zweite Hohlräume mit den Außenabmessungen der Trittflächen 6 auf. Der erste Hohlraum wird durch ein entfernbares Teil, insbesondere einen Schieber in Form des Pedalkörpers verschlossen. Während dessen werden die zweiten Hohlräume durch einen zweiten Kunststoff ausgespritzt. Nach zumindest teilweiser Verfestigung des zweiten Kunststoffes wird das Teil entfernt und der erste Hohlraum durch einen ersten Kunststoff ausgespritzt.

**Ansprüche**

1. Pedal mit Trittflächen aus einem Kunststoffmaterial, das von dem Material des Pedalkörpers unterschiedlich ist, **dadurch gekennzeichnet,** daß Pedalkörper (1) und Trittflächen (6) aneinander durch eine Klebverbindung befestigt sind.

2. Pedal nach Anspruch 1, **dadurch gekennzeichnet,** daß die Verbindung eine Schmelzverbindung ist.

3. Verfahren zur Herstellung eines Pedals nach Anspruch 1 oder 2, **dadurch gekennzeichnet,** daß die Trittflächen (6) getrennt in einer ersten Form hergestellt werden, daß der Pedalkörper (1) in einer zweiten hergestellt wird und daß Trittflächen (6) und Pedalkörper (1) aneinander geklebt, geschweißt oder durch Anlösen der Unterseite der Trittflächen (6) angeformt werden.

4. Verfahren zur Herstellung eines Pedals nach Anspruch 3, **dadurch gekennzeichnet,** daß in eine Form des Pedalkörper (1) die zuvor hergestellten Trittflächen (6) eingelegt und danach der Kunststoff des Pedalkörpers (1) eingespritzt wird.

5. Verfahren nach einem der Ansprüche 1 oder 2, **dadurch gekennzeichnet,** daß in eine Form der Pedalkörper (1) eingelegt und die Trittflächen (6) angespritzt werden.

6. Verfahren nach Anspruch 1 oder 2, **dadurch gekennzeichnet,** daß eine Form mit einem ersten Hohlraum mit den Außenabmessungen des Pedalkörpers (1) mit dem ersten Kunststoff ausgespritzt wird und hierbei die angrenzenden zweiten Hohlräume in Form und Größe der Trittfläche (6) durch entfernbare Teile, insbesondere Schieber verschlossen, insbesondere ausgefüllt sind und daß nach zumindest teilweiser Verfestigung des Pedalkörpermaterials die Teile entfernt und die zweiten Hohlräume mit dem zweiten Kunststoff ausgespritzt werden.

7. Verfahren nach Anspruch 1 oder 2, **dadurch gekennzeichnet,** daß eine Form einen ersten Hohlraum mit den Außenabmessungen des Pedalkörpers (1) und daran angrenzende zweite Hohlräume mit den Außenabmessungen der Trittflächen (6) aufweist, daß der erste Hohlraum durch ein entfernbares Teil, insbesondere einen Schieber in Form des Pedalkörpers verschlossen ist und während dessen die zweiten Hohlräume durch einen zweiten Kunststoff ausgespritzt werden und daß nach zumindest teilweiser Verfestigung des zweiten Kunststoffes das Teil entfernt und der erste Hohlraum durch einen ersten Kunststoff ausgespritzt wird.

8. Verfahren nach einem der vorherigen Ansprüche, **dadurch gekennzeichnet,** daß das Material der Trittflächen (6) weicher als das des Pedalkörpers (1) ist.

FIG. 1

FIG. 2

FIG. 3

| Europäisches<br>Patentamt | EUROPÄISCHER RECHERCHENBERICHT | Nummer der Anmeldung |
|---|---|---|
| | | EP 89 10 3370 |

## EINSCHLÄGIGE DOKUMENTE

| Kategorie | Kennzeichnung des Dokuments mit Angabe, soweit erforderlich,<br>der maßgeblichen Teile | Betrifft<br>Anspruch | KLASSIFIKATION DER<br>ANMELDUNG (Int. Cl.5) |
|---|---|---|---|
| X | LU-A- 32 079 (W. TISSOT)<br>* Ansprüche; Figures * | 1-2,5,8 | B 62 M 3/08 |
| A | | 4 | |
| | --- | | |
| X | US-A-2 605 649 (J.H. COUNTRYMAN)<br>* Insgesamt * | 1-2,5,8 | |
| A | | 4 | |
| | --- | | |
| A | FR-A-2 135 730 (ETABLISSEMENTS MAURICE<br>MAILLARD)<br>* Seite 3, Zeilen 6-12; Figur * | 1-3 | |
| | --- | | |
| A | EP-A-0 253 576 (T.G. NICHOLAS)<br>* Zusammenfassung; Figuren * | 6-7 | |
| | ----- | | |

RECHERCHIERTE
SACHGEBIETE (Int. Cl.5)

B 29 C
B 21 D
B 62 M

Der vorliegende Recherchenbericht wurde für alle Patentansprüche erstellt

| Recherchenort | Abschlußdatum der Recherche | Prüfer |
|---|---|---|
| DEN HAAG | 25-10-1989 | FRANKS B.G. |